# NEUE EUROPÄISCHE PATENTSCHRIFT

(11) **EP 0 638 764 B2**
(45) Veröffentlichungstag und Bekanntmachung des Hinweises auf die Entscheidung über den Einspruch: **27.03.2002**
(45) Hinweis auf die Patenterteilung: 12.06.1996
(21) Anmeldenummer: 94111984.4
(22) Anmeldetag: 01.08.1994
(51) Int. Cl.: F21V 7/00, F21V 8/00

(54) **Vorwiegend direkt strahlende Innenleuchte**
Indoor lamp for mainly direct lighting
Lampadaire à éclairage principalement direct

(30) Priorität: 03.08.1993 DE 4326063
(43) Veröffentlichungstag der Anmeldung: 15.02.1995
(73) Patentinhaber: SIEMENS AKTIENGESELLSCHAFT, 80333 München (DE)
(72) Erfinder: Teklak, Janusz, Dipl.Phys., D-83278 Traunstein (DE)
(74) Vertreter: Goddar, Heinz J., Dr.

(56) Entgegenhaltungen:
- AT-B- 378 589
- DE-U- 8 515 067
- DE-U1- 7 812 261
- NL-A- 7 905 664

## Beschreibung

Die Erfindung bezieht sich auf eine vorwiegend direkt strahlende Innenleuchte gemäß dem Oberbegriff des Patentanspruches 1.

Hochwertige Innenleuchten müssen üblicherweise speziellen Abschirmbedingungen genügen, um bei ihrer Anwendung in gewerblich genutzten Innenräumen unerwünschte Reflexblendungen an Arbeitsplätzen zu vermeiden. Für die optimierte Beleuchtung eines Bildschirmarbeitsplatzes ist beispielsweise festgelegt, daß die Leuchtdichte der Leuchte im 90°-Winkelbereich zwischen der vertikalen und der Horizontalen in zwei Teilbereiche unterteilt ist, nämlich einen Ausleuchtbereich mit einem Ausstrahlungswinkel der Leuchte von bis zu 50° gegen die Vertikale und einem entsprechenden Dunkelbereich mit einem gegen die Horizontale gemessenen Abschirmwinkel von bis zu 40°. Je nach den Anforderungen, die sich an die Ausleuchtung von Innenräumen stellen, kann die Aufteilung dieser Ausstrahl-bzw. Dunkelbereiche auch davon abweichend gewählt sein.

Unabhängig von der bei bestimmten Anwendungsfällen gewählten bzw. zu verwirklichenden speziellen Art der Abschirmbedingung erfordert eine solche Bedingung aber zunächst immer einen Leuchtenaufbau, bei dem das Leuchtmittel, häufig eine langgestreckte Lampe, in einem Leuchtengehäuse angeordnet und von einem Hauptreflektor umgeben ist, dessen Ränder eine einseitige, vorzugsweise nach unten gerichtete Lichtaustrittsöffnung freilassen. Bei einer vorgegebenen Breite der Lichtaustrittsöffnung muß dann die Lichtquelle in einem vorgegebenen vertikalen Abstand von der Lichtaustrittsebene angeordnet sein, um die jeweilige Abschirmbedingung erfüllen zu können. Damit wird deutlich, daß die senkrecht zur Lichtaustrittsebene stehende, konstruktive Höhe der Innenleuchte in einem vorgegebenen Verhältnis zu ihrer Breite steht, das in vielen Anwendungsfällen den Einsatz derartiger Innenleuchten erschwert.

Weil von dem hier vorliegenden Leuchtentyp abweichend, sei nur am Rande erwähnt, daß es möglich ist, dieses Höhen/Breiten-Verhältnis im Leuchtenaufbau auch bei kritischen Abschirmbedingungen zu optimieren, indem man innerhalb des Hauptreflektors der Leuchte, die Lichtquelle in Richtung auf die Lichtaustrittsöffnung der Leuchte abschirmend, einen Gegenreflektor vorsieht. Derartige Leuchten werden als Sekundärleuchten bezeichnet, weil alles von der Lichtquelle abgestrahlte Licht mindestens einmal in der Leuchte reflektiert wird, bevor es durch die Lichtaustrittsöffnung der Leuchte austreten kann. Bei diesem Leuchtentyp sind sowohl kritische Abschirmbedingungen zu erfüllen als auch günstigere Leuchtenabmessungen in bezug auf das Verhältnis von Leuchtenhöhe zur Leuchtenbreite zu erreichen. Erkauft werden aber diese Vorteile mit dem Nachteil eines hohen Aufwandes bei der Optimierung des Leuchtenwirkungsgrades. Denn nach diesem Prinzip tritt das von der Lichtquelle ausgestrahlte Licht aus der Leuchte erst nach gegebenenfalls mehrfacher Reflexion aus. Lichtverluste sind unvermeidbar, denn in der Praxis ist keine Reflektorfläche als ideal anzusehen, außerdem muß vermieden werden, daß bei solchen Mehrfachreflexionen Licht in die Lichtquelle selbst zurückgestrahlt wird.

Es hat daher auch nicht an Versuchen gefehlt, dieses Problem auch auf andere Weise zu lösen. Für eine bestimmte Gruppe solcher Lösungsmöglichkeiten sei hier beispielhaft auf eine aus NL-A-79 05 664 bekannte Langfeldleuchte verwiesen. Diese weist ein in Richtung auf eine Lichtaustrittsfläche offenes Gehäuse mit einem in diesem angeordneten Hauptreflektor sowie eine davon umfaßte stabförmige Lampe auf. Neben einem Raster aus quer zur Leuchtenlängsachse in vorgegebenem Abstand parallel zueinander angeordneten Querlamellen besitzt diese bekannte Leuchte Abschirmelemente zur Blendungsbegrenzung des aus der Lichtaustrittsöffnung austretenden Lichtes. Bei der bekannten Leuchte sind diese Abschirmelemente in bezug auf eine die Leuchtenlängsachse enthaltende vertikale Zentralebene spiegelbildlich zueinander und im wesentlichen parallel zu dieser Ebene in der Leuchte zwischen der Lampe und der Lichtaustrittsöffnung angeordnet. Die Anordnung dieser Abschirmelemente ist dabei so gewählt, daß sie lichttechnisch den Ausblendbereich vergrößern, wodurch sich in einem gewissen Umfang die Bauhöhe der Leuchte im Verhältnis zu einer gegebenen Lichtaustrittsöffnung verringem läßt. Wie eine Mehrzahl derartiger Lösungsvorschläge auf dieser Basis gezeigt hat, ist es schwierig, derartige Abschirmelemente so zu dimensionieren und anzuordnen, daß einerseits das Höhen/Breiten-Verhältnis einer solchen vorwiegend indirekt strahlenden Leuchte bei eingehaltener Abschirmbedingung wesentlich verbessert wird und andererseits dann der Leuchtenwirkungsgrad durch diese Maßnahme nicht beeinträchtigt wird.

Eine weitere Gruppe von bekannten Lösungen betrifft vorwiegend direkt strahlende Leuchten, bei denen im Bereich ihrer der Lichtaustrittsflächen vorzugsweise etwas außerhalb dieser Fläche lichtleitende Elemente vorgesehen sind, die einen Teil des aus der Leuchte austretenden Lichtstromes umlenken. Ein Beispiel für diese Gruppe von Lösungen ist aus DE-A1-21 21 074 bekannt, in der eine Einbaureflektorleuchte für Hochdrucklampen beschrieben ist, bei der unterhalb der Reflektoröffnung mit einem bestimmten Abstand zu dieser ein Ringspiegel angeordnet ist. Mit diesem Ringspiegel soll ein aus höheren Raumwinkelbereichen des Lichtverteilungskörpers stammender Lichtstromanteil der Leuchte zur Raumdecke umgelenkt werden, um diese anzustrahlen. Dieser in seinem Abstand zu der Lichtaustrittsfläche der Leuchte einstellbare Ringspiegel erlaubt so die Leuchtdichte der aufgehellten Flächen der Raumdecke an den Anwendungsfall anzupassen. Zugleich dient er einer gewissen Blendungsbegrenzung der Leuchte, da er insbesondere die seitlich mit hohen Ausstrahlungswinkeln aus der Leuchte austretende Lichtstromanteile erfaßt und reflektiert.

Eine weitere Lösung ist aus DE-A1-36 33 976 bekannt, in der ein Deckenstrahler mit Umfeldaufhellung beschrieben ist, bei dem der untere Rand eines Reflektors der Leuchte einen sogenannten Lichtstreukörper aufweist. Dieser Lichtstreukörper kann als ein strahlungsstreuendes Prisma, gegebenenfalls auch als Doppelprisma ausgebildet sein und soll ebenfalls wieder den in einem hohen Winkelbereich des Lichtverteilungskörpers der Leuchte ausgestrahlten Randlichtstrom der Leuchte erfassen und seitlich nach oben abgeben, um dabei Dunkelfeldzonen in der Decke aufzuhellen.

DE 78 12 261 U1 beschreibt eine vorwiegend direkt strahlende Einbauleuchte mit Blendungsbegrenzung, bei der eine Lichtquelle unterhalb eines vogelschwingenförmigen Hauptreflektors angeordnet ist. An diesen Hauptreflektor schließen sich auf beiden Seiten der Leuchte vertikale Abschlußreflektoren an, welche die Funktion haben, das von dem Hauptreflektor reflektierte Licht um die vertikale Bauhöhe der Leuchte versetzt abzustrahlen. Unterhalb des Hauptreflektors sind zu beiden Seiten der Lampe Hilfsreflektoren vorgesehen, welche der Blendungsbegrenzung hinsichtlich des von der Lampe direkt abgestrahlten Lichts dienen. Zwischen den Hilfsreflektoren und dem Hauptreflektor ist ein Zwischenraum vorgesehen, durch den hindurch Licht auf den Hauptreflektor von der Lampe eingestrahlt werden kann.

AT-PS 378 589 offenbart eine vorwiegend direkt strahlende Innenleuchte, bei der eine Lichtquelle unterhalb eines Dachspiegels, der als Hauptreflektor dient, angeordnet ist. Zu beiden Seiten der Leuchte ist jeweils ein Hilfsreflektor angeordnet, so daß eine erste Lichtaustrittsöffnung gebildet wird, durch welche Licht von der Lampe direkt abgestrahlt wird. Eine zweite Lichtaustrittsöffnung wird durch den äußeren Rand des Dachspiegels sowie den oberen Rand der Seitenreflektoren gebildet, wobei der Rand des Dachspiegels oberhalb des oberen Randes der Seitenreflektoren liegt. Auf diese Weise kann Licht mit einem flachen Winkel austreten bzw. nach oben zur Decke gerichtet werden.

Ausgehend von diesem Stand der Technik liegt der vorliegenden Erfindung die Aufgabe zugrunde, für eine vorwiegend direkt strahlenden Innenleuchte der eingangs genannten Art eine weitere Lösung anzugeben, bei der zur Lösung bestimmter Beleuchtungsaufgaben Lichtquellen mit einem hohen abgegebenen Lichtstrom verwendbar sind, dabei dennoch bei günstiger Bauhöhe der Innenleuchte und damit relativ kleiner Lichtaustrittsfläche mit hoher Leuchtdichte in einem weiten Abschirmbereich eine Direktblendung vermieden wird.

Bei einer Innenleuchte der eingangs genannten Art wird diese Aufgabe durch die im Kennzeichen des Hauptanspruches beschriebenen Merkmale gelöst.

Die erfindungsgemäße Lösung geht zunächst grundsätzlich von der Überlegung aus, daß eine einseitige Optimierung einer Leuchte hinsichtlich ihrer Blendungseigenschaften mit Hilfe von lichttechnischen Elementen, die der Abschirmung direkt ausgestrahlten Lichtes in einem bestimmten Raumwinkel des Lichtverteilungskörpers der Leuchte dienen, häufig zu einer nicht mehr vertretbaren Minderung des Leuchtenwirkungsgrades führt. Dies ist auf die bei derartigen Leuchten vielfach auftretende Mehrfachreflexion des von der Lichtquelle ausgestrahlten Lichtes sowie des in der Praxis immer unterhalb von 1 liegenden Reflexionsgrades technischer Reflektoren zurückzuführen.

Die Erfindung geht daher von einer anderen Überlegung aus. Sie legt eine relativ hohe mittlere Leuchtdichte in der Lichtaustrittsfläche der vorwiegend direkt strahlenden Innenleuchte zugrunde, womit an sich die Gefahr einer Direktblendung aus bestimmten Betrachtungswinkeln gegeben ist. Im gegebenen Anwendungsfall einer künstlichen Beleuchtung in einem Innenraum beruht die direkte Blendung eines Betrachters auf einer Störempfindung durch sehr unterschiedliche Leuchtdichten in seinem Gesichtsfeld. Die erfindungsgemäße Lösung zielt daher insbesondere darauf ab, die durch konstruktiv technische Gegebenheiten an sich relativ kleine Lichtaustrittsöffnung der Innenleuchte mit einer relativ hohen mittleren Leuchtdichte zu vergrößern oder mit anderen Worten im Gesichtsfeld eines Leuchtenbetrachters in der Umgebung der eigentlichten Lichtaustrittsöffnung der Leuchte mit vorwiegend direkter Strahlung ein Umfeld zu schaffen, das den harten Leuchtdichteunterschied dieser ersten Lichtaustrittsöffnung zur Umgebung durch eine entsprechende Aufhellung dieser Umgebung in einem Umfang herabmindert, der einen gewissen Kompromiß der Leuchteneigenschaften hinsichtlich des Abschirmwinkels noch zuläßt.

Durch die Aufteilung des von der Lichtquelle abgegebenen Gesamtlichtstromes in einen Hauptlichtstrom und einen Nebenlichtstrom gewinnt man für den Leuchtenentwurf weiterhin lichttechnisch und konstruktiv eine wesentlich größere Gestaltungsfreiheit. Man kann so den Leuchtenreflektor zur Formung des Hauptlichtstromes mit einfachen Mitteln im wesentlichen so optimieren, daß bei günstigen Leuchtenabmessungen die von der Lichtquelle abgegebene Strahlung im Hinblick auf die gegebene Beleuchtungsaufgabe mit hohem Wirkungsgrad genutzt wird. Die davon völlig getrennte Formung des Nebenlichtstromes dient - wie erläutert - einerseits dem technischen Zweck, die Leuchtdichte in der Umgebung der Lichtaustrittsöffnung für den Hauptlichtstrom zu erhöhen. Gleichzeitig wird damit aber auch eine gestalterische Aufgabe erfüllt, die dem Beleuchtungskomfort dient. Denn für den Betrachter tritt die reine Zweckfunktion einer Leuchte mit einer relativ kleinen Lichtaustrittsöffnung hinter dem physiologisch angenehmeren Erscheinungsbild einer Beleuchtungseinrichtung zurück, die als solche durchaus wahrnehmbar ist, jedoch in ihre Umgebung ohne harte Leuchtdichtekontraste eingefügt ist. Die erfindungsgemäße Lösung steht damit im Gegensatz zu den funktional im Hinblick auf Abschirmbedingungen optimierten Zweckleuchten, wie beispielsweise den sogenannten Darkleuchten, bei denen die Abschirmwirkung derart optimiert ist, daß sie üblicherweise als Leuchten dem Betrachter nicht mehr ins Auge fallen. Dabei tritt psychologisch der Effekt ein, daß dieser Betrachter sogar irritiert sein kann, weil er Licht wahrnimmt, jedoch den Ort der Lichtquelle nicht ohne weiteres lokalisieren kann.

Wie Weiterbildungen der Erfindung zeigen, bestehen in ihrer Ausgestaltung und Weiterbildung eine Reihe von vorteilhaften Möglichkeiten, die eine Anpassung an einen jeweiligen Anwendungsfall in flexibler Weise gestatten.

Zur weiteren Erläuterung der Erfindung werden Ausführungsbeispiele im folgenden anhand der Zeichnung näher erläutert. Dabei zeigt:
Figur 1 schematisch einen Querschnitt durch eine Deckeneinbauleuchte gemäß der Erfindung, die deckenbündig montiert ist, wobei in diesem Fall zu beiden Seiten von ersten Lichtaustrittsöffnungen für die vorwiegend direkte Strahlung zweite Lichaustrittsöffnungen liegen, die die Lichtaustrittsfläche als solche vergrößern und damit den Leuchtdichtekontrast zur Umgebung der Leuchte herabmindern,
Figur 2 ein weiteres Ausführungsbeispiel in der Darstellung eines Querschnittes durch eine Deckeneinbauleuchte mit unter die Decke heruntergezogenen Lichtaustrittsöffnungen, wobei durch das seitlich austretende und aufgefächerte Nebenlicht auch die weitere Leuchtenumgebung aufhellbar ist,
Figur 3 in einem Ausschnitt eine Detaildarstellung der Ausführungsform gemäß Figur 1,
Figur 4 einen entsprechenden Ausschnitt des Ausführungsbeispieles gemäß Figur 2 und
Figur 5 eine Teilansicht eines Längsschnittes der in Figur 2 bzw. Figur 4 dargestellten Ausführungsform.

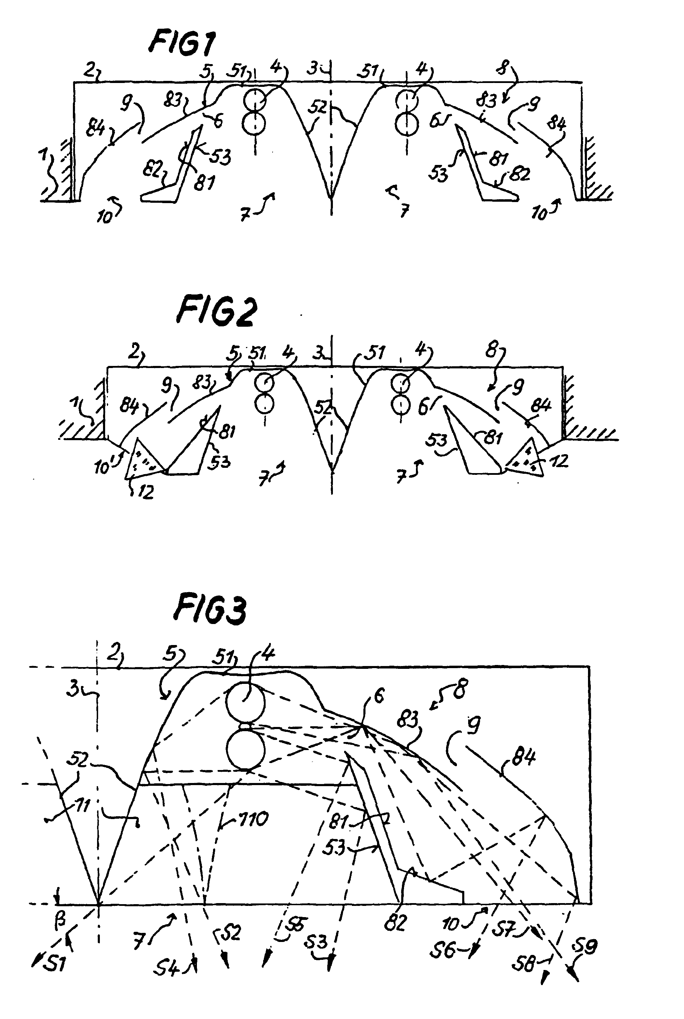

In Figur 1 ist schematisch in einem Querschnitt eine in den Ausschnitt einer Decke 1 eingesetzte Deckeneinbauleuchte mit einer in diesem Ausführungsbeispiel vorzugsweise langgestreckten Bauform dargestellt. In diesem Ausführungsbeispiel ist die Leuchte zweilampig ausgeführt. Daher sind in einem flachen rechteckförmigen Leuchtengehäuse 2 spiegelbildlich symmetrisch zu einer Leuchtenmittelachse 3 als Lichtquellen zwei Leuchtstofflampen 4, vorzugsweise in Form von Kompakt-Leuchtstofflampen, angeordnet. Jede der Leuchtstofflampen 4 ist von einem Hauptreflektor 5 umgeben, der aus je einem Dachspiegel 51 und Seitenflächen 52 bzw. 53 zusammengesetzt ist. In bezug auf die Leuchtenmittelachse 3 innenliegende Seitenflächen 52 des Hauptreflektors 5 schneiden sich indieser Leuchtenmittelachse und sind unmittelbar an den jeweiligen Dachspiegel 51 angesetzt. Dagegen sind die von der Leuchtenmittelachse 3 abgewandten äußeren Seitenflächen 53 der Hauptreflektoren 5 nicht mit der entsprechenden Außenkante des jeweiligen Dachspiegels 51 verbunden, sondern davon abgesetzt. Damit ist eine vorzugsweise schlitzförmige Ausnehmung 6 in der Leuchtenseite außenliegenden Seitenwand der beiden Hauptreflektoren 5 gebildet. Die Querschnittsform der Hauptreflektoren 5 ist - in an sich bekannter Weise - so ausgebildet, daß das von den Leuchtstofflampen 4 vor allem in den oberen Halbraum abgestrahlte Licht von der Innenfläche des Hauptreflektors 5 möglichst ohne Mehrfachreflexionen und ohne dabei wieder auf die Lichtquelle auftreffend vollständig nach unten durch eine erste Lichtaustrittsöffnung 7 austritt, die von den Außenrändern der Seitenflächen 52 bzw. 53 der Hauptreflektoren 5 gebildet wird. In der Ausführungsform gemaß Figur 1 liegen diese ersten Lichtaustrittsöffnungen 7 in der Ebene der Unterkante der Decke 1.

Allerdings wird der von den Leuchtstofflampen 4 emittierte Lichtstrom nicht vollständig durch diese ersten Lichtaustrittsöffnungen 7 abgegeben. Vielmehr tritt ein Teil des Lampenlichtstromes durch die jeweilige Ausnehmung 6 als Nebenlichtstrom benlichtstrom aus. Um diesen Nebenlichtstrom in einer gewünschten Weise zu verteilen, ist jeweils auf der von der Leuchtenmittelachse 3 abgewandten Seite der Ausnehmungen 6 eine Hilfsreflektoranordnung 8 vorgesehen, die die Ausnehmung 6 von dieser Seite her etwa trichterförmig umfaßt. Der Leuchtenmittelachse 3 zugewandt, sind zwei stumpfwinklig aneinanderstoßende Hilfsreflektorflächen 81 bzw. 82 angeordnet, die mit der jeweiligen äußeren Seitenfläche 53 des zugehörigen Hauptreflektors 5 mechanisch-konstruktiv zu einer Einheit zusammengefaßt sind. Von der Leuchtenmittelachse 3 abgewandt sind außere Hilfsreflektorflächen 83, 84 angeordnet. Dabei ist mit 83 eine der außeren Hilfsreflektorflächen bezeichnet, die vorzugsweise in Form eines Kreisbogenabschnittes nach außen weisend an die Unterkante des entsprechenden Dachspiegels 51 des jeweiligen Hauptreflektors 5 unmittelbar angesetzt ist.

An sich könnte diese äußere Reflektorflache 83 bis zum Rand des Leuchtengehäuses 2 mit einer daran angepaßten Krümmung heruntergezogen sein. In dem Ausführungsbeispiel von Figur 1 ist aber stattdessen die zweite, mit 84 bezeichnete äußere Hilfsreflektorflache als separate Fläche ausgebildet, die von dem unteren Rand der an den Dachspiegel 51 angesetzten außeren Reflektorfläche 83 mit einem vorgegebenen Abstand seitlich abgesetzt ist. Weiterhin ist angedeutet, daß diese Hilfsreflektorflache 84 nicht unbedingt eine in sich gekrümmte Fläche sein muß sondern - wie in diesem Ausführungsbeispiel - auch aus geraden Abschnitten zusammengesetzt sein kann. Die Funktion dieser Anordnung der außeren Hilfsreflektorflachen 83 und 84 besteht neben der Lenkung des Nebenlichtstromes hier auch darin, mit ihren einander zugekehrten Randflachen, die sich auf Abstand noch etwas überlappen, einen schlitzförmigen Kanal 9 zu bilden. Dadurch kann im Zusammenwirken mit der Ausnehmung 6 Abluft aus dem-Innenraum der Hauptreflektoren 5 abgeführt werden. Bei entsprechender Deckenkonstruktion kann diese Abluft entweder aus den Deckeneinbauleuchten abgesaugt oder gegebenenfalls einfach abgeführt werden, wodurch zur Verbesserung des Leuchtenwirkungsgrades gerade bei der Verwendung von strahlungsintensiven Lichtquellen eine optimale Betriebstemperatur in der Deckeneinbauleuchte eingehalten werden kann.

In Figur 3 sind in einem vergrößerten Ausschnitt der Querschnittsdarstellung von Figur 1 weitere Einzelheiten dieser beschriebenen Leuchtenform illustriert. Zunächst ist dort angedeutet, daß die Deckeneinbauleuchte auch quer zur Leuchtenlängsachse unterhalb der Leuchtstofflampen 4 und in einem vorgegebenen Abstand parallel zueinander angeordnete Rasterelemente 11 aufweisen kann, deren doppelt parabolförmiges Querschnittsprofil 110 in der Darstellung von Figur 3 in strichpunktierten Linien angedeutet ist. Wie an sich bekannt, dienen derartige Rasterelemente, häufig auch als Querlamellen bezeichnet, dazu, gegebene Abschirmbedingungen der Leuchte in der C90°-C270°-Ebene einzuhalten.

Darüber hinaus ist die Lichttechnik der beschriebenen Ausführungsform einer Deckeneinbauleuchte durch eine Mehrzahl von ausgewählten Lichtstrahlen verdeutlicht. Die Abschirmwirkung in der C0°-C90°-Ebene illustriert ein erster Lichtstrahl S1. Dieser fällt mit einer Tangente zusammen, die vom Rand der ersten Lichtaustrittsöffnung 7 an die dieser Lichtaustrittsöffnung zugekehrte Oberfläche der Leuchtstofflampe 4 gelegt ist. Der Winkel, den dieser Randstrahl S1 mit der - hier als horizontal liegend angenommen - Ebene der ersten Lichtaustrittsöffnung 7 einschließt, ist der Abschirmwinkel β der Deckeneinbauleuchte in der C0°- C90°-Ebene. Stellt man sich diesen Tangentialstrahl im Uhrzeigersinn bzw. in Gegenrichtung in die Leuchte hineingedreht vor, so treten dabei auch Lichtstrahlen S2 bzw. S3 auf, die an der inneren Seitenfläche 52 bzw. der äußeren Seitenfläche 53 des Hauptreflektors 5 reflektierte Lichtstrahlen darstellen. Ein weiterer, durch die erste Lichtaustrittsöffnung 7 tretender Lichtstrahl S4 geht als Tangentialstrahl von der dem entsprechenden Dachspiegel 51 zugekehrten Oberfläche der Leuchtstofflampe 4 aus, wird ebenfalls an der inneren Seitenfläche 52 des Hauptreflektors 5 reflektiert und nach unten gegen die Lichtaustrittsöffnung 7 gerichtet. Da die Leuchtstofflampe 4 in diesem Ausführungsbeispiel als Kompaktleuchtstofflampe realisiert angesehen wird, besitzt sie im Querschnitt zwei kreisförmige Leuchtkörper. Deshalb ist in Figur 3 auch ein Lichtstrahl S5 gezeigt, der von der Oberkante des der Lichtaustrittsöffnung 7 zugewandten Leuchtkörpers der Leuchtstofflampe 4 als Tangentialstrahl ausgeht, an der äußeren Seitenfläche 53 des Hauptreflektors 5 reflektiert wird und danach durch die erste Lichtaustrittsöffnung 7 hindurchtritt. Mit diesen Beispielen der Lichtstrahlen S1 bis S5 ist die Verteilung des durch die erste Lichtaustrittsöffnung 7 tretenden Lichtes näherungsweise verdeutlicht.

Wie sich die Hilfsreflektoranordnung 8 auf die Verteilung des durch die Ausnehmung 6 hindurchtretenden Nebenlichtstromes auswirkt, ist mit weiteren Lichtstrahlen illustriert. Dazu ist in Figur 3 jeweils ein Paar von zu beiden Seiten an die Leuchtkörper der Leuchtstofflampe 4 gelegten Tangentialstrahlen ausgewählt. Diese beiden Paare von Tangentialstrahlen stehen beispielhaft für die von den beiden Leuchtkörpern der Leuchtstofflampe 4 ausgehenden, die Ausnehmung 6 durchtretenden Lichtbündel. Dem an die Unterkante des unteren Leuchtkörpers der Leuchtstofflampe 4 gelegten Tangentialstrahl entspricht der mehrfach reflektierte Lichtstrahl S6. Der an die obere Kante des unteren Leuchtkörpers der Leuchtstofflampe 4 gelegte Tangentialstrahl entspricht geometrisch dem Lichtstrahl S7, der nach nur einmaliger Reflexion an der äußeren Hilfsreflektorfläche 83 durch die zweite Lichtaustrittsöffnung 10 austritt. Nach diesem Beispiel läßt sich leicht überlegen und auch geometrisch nachvollziehen, wie sich eine Verschiebung des Schnittpunktes dieser beiden Tangentialstrahlen längs der Oberfläche der äußeren Reflektorfläche 83 auf die Lichtverteilung in der zweiten Lichtaustrittsöffnung 10 auswirkt. Natürlich ergeben sich dabei gewisse Verschiebungen der Reflexionswinkel, grundsätzlich aber ändert sich das dargestellte Schema der unterschiedlichen Anzahl von Reflexionen der jeweils den beiden Tangentialstrahlen entsprechenden Lichtstrahlen nicht.

Betrachtet man nun weiterhin den Einfluß des oberen Leuchtkörpers der Leuchtstofflampe 4 beispielhaft an den beiden weiteren Lichtstrahlen S8 und S9, so zeigt sich auch hier, daß einer der Strahlen von der weiter außen liegenden Hilfsreflektorfläche 84 weg durch die zweite Lichtaustrittsöffnung 10 hindurch in Richtung auf die Leuchtenmittelachse 3 reflektiert wird, während der andere von dieser Achse weg reflektiert die Lichtaustrittsöffnung 10 durchtritt. Das gezeichnete Beispiel ist so gewählt, daß für den in Richtung auf die Leuchtenmittelachse 3 austretenden Lichtstrahl S8 gerade noch die Randbedingung erfüllt ist. Jeder noch flacher auf die mit 83 bezeichnete Hilfsreflektorfläche auftreffende Lichtstrahl, der tangential von der Oberseite des oberen Leuchtkörpers der Leuchtstofflampe 4 ausgeht, durchtritt die zweite Lichtaustrittsöffnung 10 ohne Reflexion an der mit 84 bezeichneten äußeren Hilfsreflektorfläche. So läßt sich aus der Richtung des Lichtstrahles S8 vor seiner Reflexion an dieser Hilfsreflektorfläche 84 ohne weiteres ableiten, daß die für den Hauptlichtstrom geltende Abschirmbedingungen auch für den durch die zweite Lichtaustrittsöffnung 10 austretenden Nebenlichtstrom erfüllt ist.

In Figur 2 ist ein weiteres Ausführungsbeispiel - in einer zum beschriebenen Ausführungsbeispiel nach Figur 1 entsprechenden Darstellung - wieder das Prinzip illustrierend in einem Querschnitt gezeigt. Nach der vorausgegangenen detaillierten Erläuterung kann deshalb hier, soweit Übereinstimmungen bestehen, auf unnötige Wiederholungen verzichtet werden. Ein wesentliches, abweichendes Merkmal des zweiten Ausführungsbeispieles besteht darin, daß bei der Deckenleuchte in der Ausführung nach Figur 2 die Lichtaustrittsöffnungen 7 bzw. 10' nicht mehr mit der Unterseite der Decke 1 bündig, sondern daraus hervorstehend angeordnet sind. Dabei werden gleichwohl dieselben Prinzipien der Aufteilung des von den Leuchtstofflampen 4 abgegebenen Lichtstromes in einen vorwiegend direkt abgestrahlten Hauptlichtstrom und in einen vorwiegend indirekt abgestrahlten Nebenlichtstrom angewandt, wobei in bezug auf diesen Nebenlichtstrom eine etwas abgewandelte Funktion erzielt wird.

Unterstellt man, wie in Figur 2 dargestellt, auch bei herausgezogenen, d. h. aus der Decke 1 hervortretenden ersten Lichtaustrittsöffnungen 7 die gleiche Bauhöhe der Deckenleuchte wie im beschriebenen Ausführungsbeispiel, so ergibt sich damit zunächst eine geringere Einbautiefe. Wesentlicher ist aber die andere lichttechnische Funktion in bezug auf die Verteilung des Nebenlichtstromes. In den zweiten, hier vorzugsweise schräg zur Decke 1 verlaufenden Lichtaustrittsöffnungen 10' ist jeweils ein lichtlenkendes Element, insbesondere in Form eines prismatischen Lichtleitkörpers 12 angeordnet. Die Neigung der zweiten Lichtaustrittsöffnungen 10' in Verbindung mit diesem Lichtleitkörper 12 ergibt - im Vergleich zum ersten Ausführungsbeispiel - eine etwas andere Lichtverteilung. Während der Nebenlichtstrom bei einer Deckenleuchte gemäß Figur 1 vorwiegend nach unten und von der Decke 1 weg gerichtet ist, dient der Lichtleitkörper 12 bei einer Deckenleuchte gemäß Figur 2 dazu, den Nebenlichtstrom stärker aufzufächern und insbesondere auch einen gewissen Anteil gegen die Decke 1 in der Leuchtenumgebung zu richten.

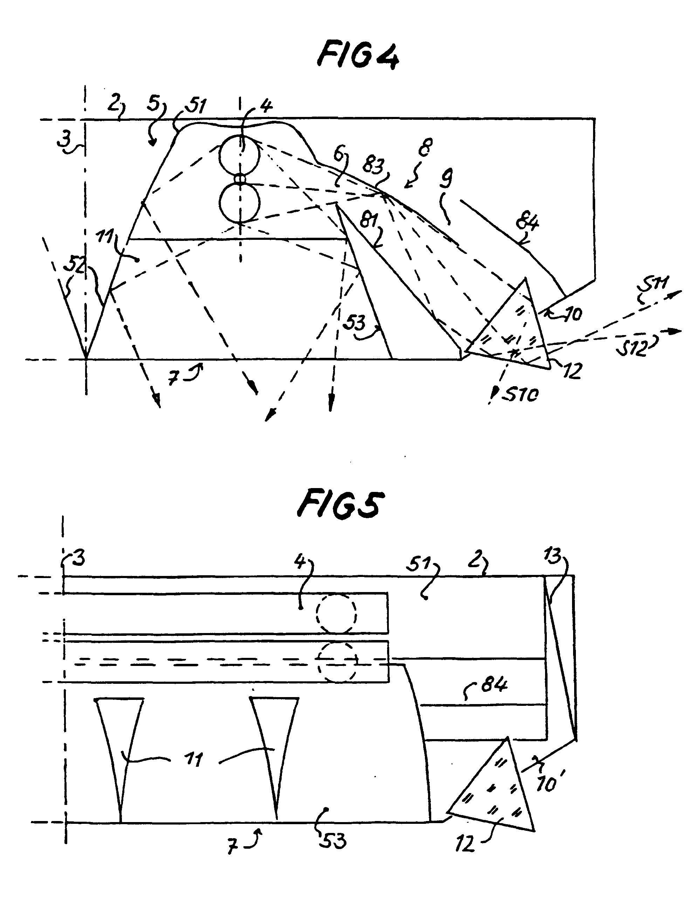

In Figur 4, die analog zur Darstellung des ersten Ausführungsbeispiels in Figur 3 eine Teilansicht zu Figur 2 in vergrößertem Maßstab und in weiteren Details zeigt, erkennt man deutlich diese Funktion anhand der dort über die Hilfsreflektoranordnung 81 bis 84 sowie den Lichtleitkörper 12 umgelenkten Lichtstrahlen S10 bis S12. Dabei wird vorausgesetzt, daß der transparente, prismatische Lichtleitkörper 12 das in ihn eintretende Licht aufgrund seines Querschnitts total reflektierend entweder wie z. B. bei dem Lichtstrahl S10 in Richtung auf die Leuchtenmittelachse 3 im wesentlichen nach unten gerichtet oder wie bei den Lichtstrahlen S11 bis S12 im wesentlichen nach der Seite gerichtet, in der Leuchtenumgebung gegen die Decke 1 abstrahlt. Das Ergebnis ist in diesem Ausführungsbeispiel eine breitere Streuung der Lichtverteilung. Zusätzlich zu den horizontal liegenden ersten Lichtaustrittsöffnungen 7 sowie der horizontalen Projektion der Flächen der zweiten Lichtaustrittsöffnungen 10', beide die insgesamt wahrgenommene Lichtaustrittsöffnung der Deckenleuchte darstellend, wird noch eine gewisse Deckenaufhellung bewirkt. Ein weiteres, lichttechnisch funktionales Detail ergibt sich daraus, daß die Lichtleitkörper 12, in den zweiten Lichtaustrittsöffnungen 10" angeordnet, jeden direkten Einblick in die Leuchte verhindern und damit in bezug auf den Nebenlichtstrom eindeutig die Charakteristik einer Sekundärleuchte verwirklicht ist. Beide Eigenschaften tragen dazu bei, unerwünschte Leuchtdichtekontraste im Betrachtungsfeld trachtungsfeld mit der Deckenleuchte im Zentrum zu eliminieren.

In Figur 5 ist zur Vervollständigung noch ein Schnitt durch die Deckenleuchte gemäß Figur 2 bzw. 4 parallel zur Längsrichtung der Leuchtstofflampen 4, d. h. senkrecht zu den Darstellungen in Figur 2 bzw. 4 gezeigt. In diesem Schnitt erkennt man insbesondere auch, daß die Lichtleitkörper 12 allseitig die ersten Lichtaustrittsöffnungen 7 umschließen können, die untereinander in einem vorgegebenen Abstand liegenden Rasterlamellen 11 in der Leuchte und ein schräg gestelltes Reflektorseitenteil 13. Dieses dient dazu, auch noch in Richtung der Lampenlängsachse ausgestrahltes Licht - funktional ähnlich wie mit Hilfe der Hilfsreflektoranordnung 81 bis 84 - zur Verbesserung des Leuchtenwirkungsgrades als Nutzlicht nach unten bzw. gegen die Decke 1 gerichtet abzustrahlen.

Die vorstehend erläuterten Ausführungsbeispiele beschränken die Erfindung nicht auf eine bestimmte Bauform oder eine einzelne Verwendung einer Innenleuchte. Die beschriebenen Prinzipien lassen sich ohne weiteres auf Leuchtenformen mit quadratischen, langsgestreckt rechteckigen oder rotationssymmetrisch ausgebildeten regelmäßig gekrümmten Grundflächen anwenden. Wenn auch bei dem zuletzt beschriebenen Ausführungsbeispiel insbesondere auf eine Verwendung als Deckenleuchte abgestellt ist, so bedeutet dies nicht, daß sich die erfindungsgemäße Lösung lediglich bei Deckeneinbauleuchten einsetzen ließe, vielmehr wäre es bei entsprechender Anpassung auch denkbar, eine erfindungsgemäß ausgebildete Innenleuchte von der Decke abgesetzt zu installieren.

## Patentansprüche

1. Vorwiegend direkt strahlende Innenleuchte mit Blendungsbegrenzung, bei der mindestens eine Lichtquelle (4) innerhalb eines einen Dachspiegel (51) und gekrümmte Seitenflächen (52, 53) aufweisenden Hauptreflektors (5) angeordnet ist, dessen Außenränder eine erste Lichtaustrittsöffnung (7) der Leuchte begrenzen,
wobei im Übergangsbereich zwischen Dachspiegel und mindestens einer der Seitenflächen (52) des Hauptreflektors eine Ausnehmung (6) zum seitlichen Austritt eines Teils des von der Lichtquelle abgegebenen Lichtstroms vorgesehen ist,
sich in Richtung auf eine die erste Lichtaustrittsöffnung enthaltende Ebene öffnende äußere Hilfsreflektoren (81 bis 84) vorgesehen sind, welche über die Ausnehmung (6) heruntergezogen sind und deren Außenränder eine weitere Lichtaustrittsöffnung (10, 10') bilden, deren Leuchtdichte niedriger als die in der ersten Lichtaustrittsöffnung auftretende mittlere Leuchtdichte ist,
und die Hilfsreflektoren den Lichtstrom zu der weiteren Lichtaustrittsöffnung vorwiegend nach unten und von dem Dachspiegel weg richten.

2. Innenleuchte nach Anspruch 1, **gekennzeichnet durch** eine im Querschnitt bezüglich einer Leuchtenmittenachse (3) spiegelbildlich symmetrische Anordnung zweier Hauptreflektoren (5) sowie mindestens einer innerhalb dieser Hauptreflektoren angeordneten Lichtquelle (4).

3. Innenleuchte nach Anspruch 1 oder 2, **gekennzeichnet durch** ihre Ausgestaltung als Deckenleuchte, bei der die beiden Lichtaustrittsöffnungen (7, 10) in einer Ebene liegend, im eingebauten Zustand der Leuchte im wesentlichen deckenbündig angeordnet sind.

4. Innenleuchte nach Anspruch 1 oder 2, **gekennzeichnet durch** ihre Ausgestaltung als Deckenleuchte derart, daß die erste Lichtaustrittsöffnung (7) im montierten Zustand der Leuchte in vorgegebenem Abstand parallel von der umgebenden Fläche der Decke (1) abgesetzt angeordnet ist, die zweite Lichtaustrittsöffnung (10') in Richtung auf diese Deckenfläche schräg geneigt angeordnet und die die zweite Lichtaustrittsöffnung festlegenden Hilfsreflektoren (81 bis 84) so ausgebildet sind, daß ein Teil des **durch** diese zweite Lichtaustrittsöffnung abgestrahlten Lichtes gegen die umgebende Dekkenfläche gerichtet ist.

5. Innenleuchte nach Anspruch 4, **dadurch gekennzeichnet, daß** in dem Bereich der zweiten Lichtaustrittsöffnung (10') ein lichtlenkendes Element (12) angeordnet ist, das aus dieser Lichtaustrittsöffnung austretendes Licht in bezug auf die Normale zur Lichtaustrittsfläche streut.

6. Innenleuchte nach Anspruch 5, **dadurch gekennzeichnet, daß** das lichtlenkende Element als transparenter, im Querschnitt prismatischer Lichtleitkörper (12) ausgebildet ist, dessen Seitenflächen in bezug auf die zweite Lichtaustrittsöffnung (10') so angeordnet sowie zueinander ausgerichtet sind, daß auf ihn an einer Seitenfläche auftreffendes Licht sowohl durch Totalreflexion im Inneren umgelenkt als durch Brechung an den anderen Seitenflächen abgestrahlt wird.

7. Innenleuchte nach einem der Ansprüche 1 bis 6, **dadurch gekennzeichnet, daß** die mit ihrem leuchteninneren Rand die Begrenzung der Ausnehmung (6) zum seitlichen Austritt eines Teillichtstromes bildende Seitenwand (52) des Hauptreflektors (5) mit dem ihr zugekehrten Hilfsreflektor (81, 82) eine mechanische Einheit mit geschlossenem, teilweise aus Geradenabschnitten zusammengesetztem Querschnitt bildet.

8. Innenleuchte nach Anspruch 7 **dadurch gekennzeichnet, daß** der von dem Hauptreflektor (5) abgekehrte Teil (83, 84) der Hilfsreflektoranordnung (8) aus einem an den Rand des Dachspiegels (51) des Hauptreflektors unmittelbar angesetzten, gekrümmt nach außen weisenden, ersten Reflektorteil (83) sowie einem davon in einem vorgegebenen Abstand nach außen abgesetzten, zweiten Reflektorteil (84) besteht, so daß zwischen diesen beiden Reflektorteilen ein Zwischenraum gebildet ist, der als eine Abluftöffnung (9) der Innenleuchte dient.

9. Innenleuchte nach Anspruch 8, **dadurch gekennzeichnet, daß** die die Abluftöffnung (9) bildenden Randflächen der beiden Reflektorteile (83, 84) auf eine vorgegebene, von ihrem gegenseitigen Abstand abhängige Länge überlappend ausgebildet sind, wodurch eine Lichtabstrahlung durch diese Abluftöffnung verhindert wird.

10. Innenleuchte nach einem der vorhergehenden Ansprüche, **dadurch gekennzeichnet, daß** in dem Hauptreflektor (5) senkrecht zur ersten Lichtaustrittsöffnung (7) stehende Rasterlamellen (11) zur seitlichen Blendungsbegrenzung der Leuchte untereinander in einem vorgegebenen Abstand angeordnet sind.

11. Innenleuchte nach einem der vorhergehenden Ansprüche, **dadurch gekennzeichnet, daß** diese in bezug auf eine zur Leuchtenmittelachse (3) senkrechten Ebene rotationssymmetrisch ausgebildet ist.

12. Innenleuchte nach einem der Ansprüche 1 bis 10, **dadurch gekennzeichnet, daß** diese Leuchte in einer zur Leuchtenmittelachse (3) senkrechten Ebene kastenförmig quadratisch ausgebildet ist.

13. Innenleuchte nach einem der Ansprüche 1 bis 10, **dadurch gekennzeichnet, daß** diese Leuchte in einer zur Leuchtenmittelachse (3) senkrechten Ebene langgestreckt rechteckig ausgebildet ist.

14. Innenleuchte nach einem der vorhergehenden Ansprüche, **dadurch gekennzeichnet, daß** sie mit mindestens einer ausgedehnten Lichtquelle (4) hoher Lichtintensität, beispielsweise mindestens einer Kompaktleuchtstofflampe oder einer Metalldampflampe bestückt ist.

## Claims

1. Interior luminaire for mainly direct lighting with glare limitation, in which at least one light source (4) is arranged inside a main reflector (5) having a top mirror (51) and curved side surfaces (52, 53), the outer edges of which bound a first light exit opening (7) of the luminaire, where, in the transition region between top mirror and at least one of the side surfaces (52) of the main reflector, there is provided a cutout (6) for the lateral emergence of part of the light flux emitted by the light source, there are provided, open in the direction of a plane containing the first light exit opening outer auxiliary reflectors (81 to 84) which are pulled down over the cutout (6) and of which the outer edges form a further light exit opening (10, 10'), the luminance of which is lower than the average luminance in the first light exit opening, and the auxiliary reflectors direct the light flux predominantly downwards towards the further light exit opening and away from the top mirror.

2. Interior luminaire according to Claim 1, **characterized by** an arrangement, which is mirror-symmetrical in cross-section in relation to a luminaire central axis (3), of two main reflectors (5) and of at least one light source (4) arranged inside these main reflectors.

3. Interior luminaire according to Claim 1 or 2, **characterized by** its configuration as a ceiling luminaire in which the two light exit openings (7, 10), lying in one plane, are arranged essentially flush with the ceiling in the installed condition of the luminaire.

4. Interior luminaire according to Claim 1 or 2, **characterized by** its configuration as a ceiling luminaire in such a way that the first light exit opening (7), in the mounted condition of the luminaire, is arranged offset at a prescribed distance parallel to the surrounding surface of the ceiling (1), the second light exit opening (10') is arranged obliquely inclined to the direction of this ceiling surface and the auxiliary reflectors (81 to 84) fixing the second light exit opening are constructed in such a way that part of the light emitted through this second light exit opening is directed towards the surrounding ceiling surface.

5. Interior luminaire according to Claim 4, **characterized in that**, in the region of the second light exit opening (10'), there is arranged a light-deflecting element (12) which scatters light emerging from this light exit opening in relation to the normal to the light exit surface.

6. Interior luminaire according to Claim 5, **characterized in that** the light-deflecting element is designed as a transparent light-conducting body (12) of prismatic cross-section, of which the side surfaces are arranged in relation to the second light exit opening (10') and are aligned with each other in such a way that light which is incident on the light-deflecting element on one side surface is both deflected as a result of total reflection in the interior and radiated as a result of refraction at the other side surfaces.

7. Interior luminaire according to one of Claims 1 to 6, **characterized in that** the side wall (52), forming with its edge inside the luminaire the boundary of the cutout (6) for the lateral emergence of the partial light flux, of the main reflector (5), with the auxiliary reflector (81, 82) facing it, forms one mechanical unit with a closed cross-section, partly composed of straight-line sections.

8. Interior luminaire according to Claim 7, **characterized in that** that part (83, 84), facing away from the main reflector (5), of the auxiliary reflector arrangement (8) comprises a first reflector part (83) which is curved, points outwards and is placed directly on the edge of the top mirror (51) of the main reflector, and a second reflector part (84) which is offset outward from the first at a prescribed distance, with the result that there is formed between these two reflector parts an interspace which serves as an exhaust air opening (9) of the interior luminaire.

9. Interior luminaire according to Claim 8, **characterized in that** the edge surfaces, forming the exhaust air opening (9), of the two reflector parts (83, 84) are designed to overlap over a prescribed length dependent on their mutual distance apart, as a result of which the radiation of light through this exhaust air opening is prevented.

10. Interior luminaire according to one of the preceding Claims, **characterized in that**, in the main reflector (5), perpendicular to the first light exit opening (7), upright grating lamellae (11) are arranged at a prescribed distance from one another for the lateral glare limitation of the luminaire.

11. Interior luminaire according to one of the preceding Claims, **characterized in that** this is designed to be rotationally symmetrical in relation to a plane perpendicular to the luminaire central axis (3).

12. Interior luminaire according to one of Claims 1 to 10, **characterized in that** this luminaire is designed to be of square box shape in a plane perpendicular to the luminaire central axis (3).

13. Interior luminaire according to one of Claims 1 to 10, **characterized in that** this luminaire is designed to be of elongated rectangular shape in a plane perpendicular to the luminaire central axis (3).

14. Interior luminaire according to one of the preceding Claims, **characterized in that** it is equipped with at least one extended light source (4) of high light intensity, for example at least one compact fluorescent lamp or a metal vapour lamp.

## Revendications

1. Lampe pour éclairage principalement direct d'intérieur et à limitation d'éblouissement, dans laquelle au moins une source (4) de lumière est montée à l'intérieur d'un réflecteur principal (5), qui comporte un miroir (51) de toit et des surfaces latérales (52, 53) courbées et dont les bords extérieurs délimitent une première ouverture (7) de sortie de la lumière de la lampe,
il est prévu, dans la région de transition entre le miroir de toit et au moins l'une des surfaces latérales (52) du réflecteur principal, un évidement (6) pour la sortie latérale d'une partie du flux lumineux émis par la source de lumière,
il est prévu des réflecteurs auxiliaires (81 à 84) extérieurs, s'ouvrant en direction d'un plan contenant la première ouverture de sortie de la lumière, qui sont tirés vers le bas sur l'évidement et dont les bords extérieurs forment une autre ouverture (10, 10') de sortie de la lumière de luminance inférieure à la luminance moyenne apparaissant dans la première ouverture de sortie de la lumière,
et les réflecteurs auxiliaires dirigent le flux lumineux vers l'autre ouverture de sortie de la lumière principalement vers le bas et en s'éloignant du miroir en toit.

2. Lampe pour éclairage d'intérieur suivant la revendication 1, **caractérisée par** une disposition, symétrique comme dans un miroir en section transversale par rapport à un axe (3) médian de la lampe, de deux réflecteurs principaux (5) ainsi que d'au moins une source (4) de lumière montée à l'intérieur de ces réflecteurs principaux.

3. Lampe pour éclairage d'intérieur suivant la revendication 1 ou 2, **caractérisée par** sa structure de plafonnier, dans laquelle les deux ouvertures (7, 10) de la sortie de la lumière sont dans un plan horizontal, en affleurant sensiblement au plafond lorsque la lampe est à l'état monté.

4. Lampe pour éclairage d'intérieur suivant la revendication 1 ou 2, **caractérisée par** sa structure de plafonnier telle que la première ouverture (7) de sortie de la lumière est, lorsque la lampe est à l'état monté, à une distance prescrite de la surface environnante du plafond (1), parallèle à celle-ci et en décalage par rapport à celle-ci, la seconde ouverture (10') de sortie de la lumière est inclinée en direction de cette surface de plafond et les réflecteurs auxiliaires (81 à 84) définissant la seconde ouverture de sortie de la lumière sont tels qu'une partie de la lumière rayonnée par cette seconde ouverture de sortie de la lumière soit dirigée vers la surface environnante du plafond.

5. Lampe pour éclairage d'intérieur suivant la revendication 4, **caractérisée en ce qu'**un élément (12) de déflexion de la lumière, qui disperse de la lumière sortant de cette ouverture de sortie de la lumière par rapport à la normale à la surface de sortie de la lumière, est monté dans la région de la seconde ouverture (10') de sortie de la lumière.

6. Lampe pour éclairage d'intérieur suivant la revendication 5, **caractérisée en ce que** l'élément de déflexion de la lumière est sous forme d'un corps (12) de guidage de la lumière transparent de section transversale prismatique, dont les surfaces latérales sont disposées par rapport à la seconde ouverture (10') de sortie de la lumière et sont orientées l'une par rapport à l'autre de telle sorte que de la lumière incidente sur une surface latérale de ce corps soit à la fois déviée par réflexion totale à l'intérieur et soit rayonnée par réfraction sur les autres surfaces latérales.

7. Lampe pour éclairage d'intérieur suivant l'une des revendications 1 à 6, **caractérisée en ce que** la paroi latérale (52) du réflecteur principal (5), qui délimite par son bord à l'intérieur de la lampe l'évidement (6) pour la sortie latérale d'un flux lumineux partiel, forme, avec le réflecteur auxiliaire (81, 82) tourné vers elle, une unité mécanique à section transversale fermée et constituée en partie de segments de droite.

8. Lampe pour éclairage d'intérieur suivant la revendication 7, **caractérisée en ce que** la partie (83, 84) du dispositif (8) de réflecteur auxiliaire, qui est éloignée du réflecteur principal (5) est constituée d'une première partie (83) de réflecteur rapportée directement au bord du miroir (51) de toit du réflecteur principal et dirigée vers l'extérieur en étant courbée, ainsi que d'une seconde partie (84) de réflecteur en décalage par rapport à la première partie à une distance prescrite vers l'extérieur, de sorte qu'il soit formé entre ces deux parties du réflecteur un espace intermédiaire, qui sert d'ouverture (9) de sortie d'air à la lampe pour éclairage d'intérieur.

9. Lampe pour éclairage d'intérieur suivant la revendication 8, **caractérisée en ce que** les surfaces de bord formant l'ouverture (9) de sortie d'air des deux parties (83, 84) de réflecteur sont en recouvrement sur une longueur prescrite dépendant de leur distance l'une par rapport à l'autre, ce qui empêche un rayonnement de lumière par cette ouverture de sortie d'air.

10. Lampe pour éclairage d'intérieur suivant l'une des revendications précédentes, **caractérisée en ce que** des lamelles (11) de grille perpendiculaires à la première ouverture (7) de sortie de la lumière et destinées à limiter !'éblouissement latéral de la lampe, sont montées l'une sous l'autre à une distance prescrite dans le réflecteur principal (5).

11. Lampe pour éclairage d'intérieur suivant l'une des revendications précédentes, **caractérisée en ce qu'**elle est dans un plan perpendiculaire à son axe (3) médian, à symétrie de révolution.

12. Lampe pour éclairage d'intérieur suivant l'une des revendications 1 à 10, **caractérisée en ce que** cette lampe est en forme de boîte carrée dans un plan perpendiculaire à l'axe (3) médian de la lampe.

13. Lampe pour éclairage d'intérieur suivant l'une des revendications 1 à 10, **caractérisée en ce que** cette lampe est sous forme d'un rectangle oblong dans un plan perpendiculaire à l'axe (3) médian de la lampe.

14. Lampe pour éclairage d'intérieur suivant l'une des revendications précédentes, **caractérisée en ce qu'**elle est équipée d'au moins une source (4) de lumière étendue et de grande intensité lumineuse, par exemple d'au moins un tube fluorescent compact ou d'une lampe à vapeur métallique.
